# EUROPEAN PATENT SPECIFICATION

(11) **EP 3 643 423 B1**
(45) Date of publication and mention of the grant of the patent: **05.07.2023**
(21) Application number: 19208155.2
(22) Date of filing: 12.07.2007
(51) Int. Cl.: B21J 13/02, B21J 5/02, B21J 9/02, B23Q 11/10

(54) **HOT FORMING DIE ASSEMBLY**
MATRIZENBAUGRUPPE ZUM WARMUMFORMEN
MODULE DE CONSTRUCTION À MATRICE DE FORMAGE À CHAUD

(30) Priority: 17.07.2006 US 831339 P
(43) Date of publication of application: 29.04.2020
(62) Divisional of application: 07763884.9
(73) Proprietor: Magna International Inc., Aurora, ON L4G 7K1 (CA)
(72) Inventor: Horton, Frank, Rochester Hills, MI Michigan 48309 (US); Shulkin, Boris, West Bloomfield, MI Michigan 48322 (US); Hastilow, Bradford, Rochester Hills, MI Michigan 48306 (US); Metz, Jim, Chicago, IL Illinois 60613 (US); Judkins, James, Leonard, MI Michigan 48367 (US); Hansen, Monty, Sterling Heights, MI Michigan 48310 (US); Kotagiri, Seetarama, Troy, Michigan 48098 (US); Janssen, Andreas, Troy, MI Michigan 48098 (US)
(74) Representative: Grünecker Patent- und Rechtsanwälte PartG mbB

(56) References cited:
- EP-A1- 1 640 131
- EP-A2- 1 749 593
- WO-A1-2007/028641
- US-A1- 2005 263 673

## Description

### INTRODUCTION

The present disclosure generally relates to hot forming dies and more particularly to a hot forming die and methods for its manufacture and use.

Vehicle manufacturers strive to provide vehicles that are Increasingly stronger, lighter and less costly. For example, vehicle manufacturers have expended significant efforts to utilize non-traditional materials, such as sheet aluminum, advanced high strength steels, and ultra-high strength steels, for portions of the vehicle body. While such materials can be both relatively strong and light, they are typically costly to purchase, form and/or assemble.

One proposed solution includes the use of heat-treated sheet steel panel members to form the vehicle body. In some applications, the sheet steel panel members are formed in a conventional forming process and subsequently undergo a heat-treating operation. This two-stage processing is disadvantageous in that the additional operation adds significant cost and the components can distort during the heat treat operation.

As an alternative to a process that employs a discrete heat-treating operation, it is known that certain materials, such as boron steels, can be simultaneously formed and quenched in a hot forming die. In this regard, a pre-heated sheet stock is typically introduced into a hot forming die, formed to a desired shape and quenched subsequent to the forming operation while in the die to thereby produce a heat treated component.

The known hot forming dies for performing the simultaneous hot forming and quenching steps typically employ water cooling passages (for circulating cooling water through the hot forming die) that are formed in a conventional manner, such a gun drilling. As those of ordinary skill in the art will appreciate, the holes produced by techniques such as gun drilling yield straight holes that extend through the dies. Those of ordinary skill in the art will also appreciate that as vehicle manufacturers typically do not design vehicle bodies with components that are flat and straight, the forming surfaces or die surfaces of the hot forming die will typically not be flat and planar. As such, it would not be possible for drilled water cooling passages to conform to the contour of a die surface of a hot forming die for a typical automotive vehicle body component. This fact is significant because a hot forming die that has a three-dimensionally complex shape but employs conventionally constructed water cooling passages can have portions that are hotter than desired so that the quenching operation will not be performed properly over the entire surface of the vehicle body component. As such, components formed by the known hot forming dies can have one or more regions that are relatively softer than the remainder of the component.

A further hot forming die assembly having a cap and a cap insert wherein a cooling channel is formed between the cap and the cap insert is disclosed in EP 1 640 131 A1. A further hot forming die assembly is described in US 2005/263673 A1.

Accordingly, there remains a need in the art for an improved hot forming die.

### SUMMARY

In order to solve the aforementioned problems it is provided a hot forming die assembly as defined in claim 1. Further preferred embodiments are defined in the dependent claims.

Further areas of applicability will become apparent from the description provided herein. It should be understood that the description and specific examples are intended for purposes of illustration only and are not intended to limit the scope of the present disclosure.

### BRIEF DESCRIPTION OF THE DRAWINGS

The drawings described herein are for illustration purposes only and are not intended to limit the scope of the present disclosure in any way.
Figure 1 is a schematic illustration of a hot forming die set comprising a hot forming die assembly in accordance with the teachings of the present invention, the hot forming die set being mounted in a stamping press and coupled to a source of cooling fluid;
Figure 2 is a perspective view of a lower die of a first exemplary hot forming die set constructed in accordance with the teachings of the present disclosure;
Figure 3 is a perspective view of an upper die of the first exemplary hot forming die set;
Figure 4 is a bottom perspective view of a portion of the lower die of Figure 2, illustrating the base manifold and the die structures in more detail;
Figure 5 is a top perspective view of a portion of the lower die of Figure 2, illustrating the base manifold in more detail;
Figure 6 is a top perspective view similar to that of Figure 5 but illustrating portions of the die structure coupled to the base manifold;
Figure 7 is a bottom perspective view of a portion of the die structure illustrating a seam block as coupled to a cap;
Figure 8 is a portion of a sectional view taken laterally through the lower and upper dies of Figures 2 and 3 along a cooling channel;
Figure 9 is a view similar to that of Figure 8 but illustrating a second exemplary hot forming die set which is helpful for understanding the present invention; and
Figure 10 is a bottom perspective view of a portion of the hot forming die set of Figure 9 illustrating the grooves as formed in a surface of the die member.

### DETAILED DESCRIPTION OF THE VARIOUS EMBODIMENTS

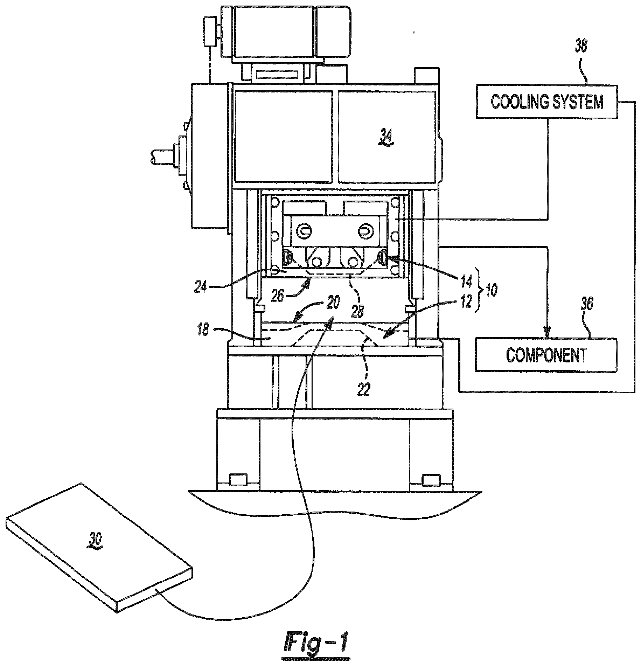

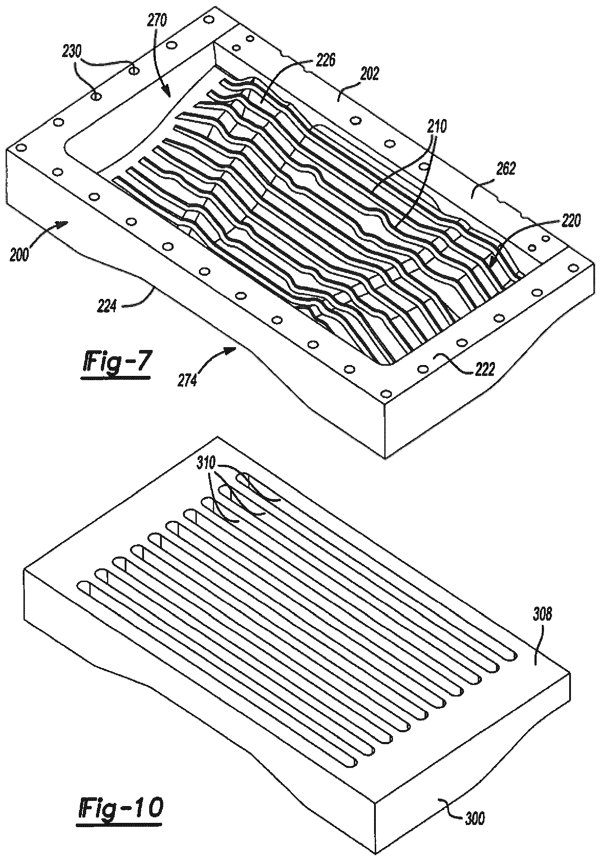

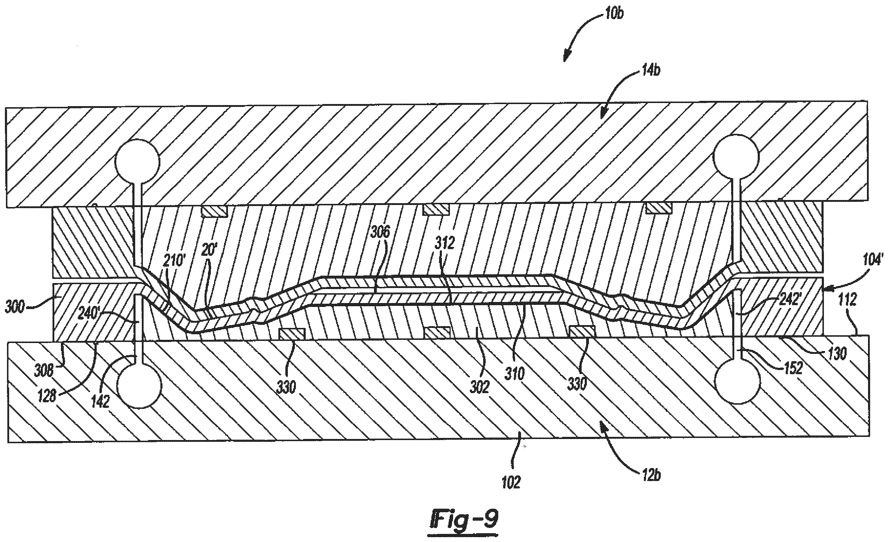

With reference to Figure 1 of the drawings, a hot forming die set 10 constructed in accordance with the teachings of the present invention is schematically illustrated. The hot forming die set 10 can include a lower die 12 and an upper die 14. The lower die 12 can include a die member 18 that can be formed of a heat conducting material such as tool steel, in particular DIE VAR^{®}, which is marketed by Böhler-Uddeholm Corporation of Rolling Meadows, Illinois, or commercially available H-11 or H-13. The die member 18 includes a complex forming or die surface 20 and a plurality of cooling channels 22. As used herein, the term "die surface" refers to the portion of the exterior surface of a die that forms a hot formed component. Moreover, the term "complex die surface" as used in this description and the appended claims means that the die surface has a three-dimensionally contoured shape that is not conducive for reliably facilitating an austenite-to-martensite phase transformation in volume production (i.e., a rate of 30 workpieces per hour or greater) if the die surface were to be cooled via cooling channels that are formed by gun drilling the cooling channel through one or two sides of the die. Each cooling channel 22 is offset from the complex die surface 20 by a first predetermined distance and this distance is consistent along the length of the cooling channel 22. Similarly, the upper die 14 can include a die member 24 that can be formed of a tool steel, such as DIEVAR^{®} or commercially available H-11 or H-13, and includes a complex die surface 26 and a plurality of cooling channels 28. Each cooling channel 28 is offset from the complex die surface 26 by a second predetermined distance, which can be different from the first predetermined distance, and this distance is consistent along the length of the cooling channel 28. The complex die surfaces 20 and 26 can cooperate to form a die cavity there between. While the arrangement shown in Figures 1 to 8 is an embodiment of the present invention, the arrangement shown in Figures 9 and 10 is helpful for understanding the present invention.

A blank 30, which can be formed of an appropriate heat-treatable steel, such as boron steel, can be pre-heated to a predetermined temperature, such as about 930°C, and can be placed in the die cavity between the complex die surfaces 20 and 26. The lower and upper dies 12 and 14 can be brought together (i.e., closed) in a die action direction via a conventional stamping press 34 to deform the blank 30 so as to form and optionally trim a hot-stamped component 36. Cooling fluid, such as water, gas or other fluid medium, which can be provided by a cooling system 38 (e.g., a cooling system that conventionally includes a reservoir/chiller and a fluid pump) can be continuously circulated through the cooling channels 22 and 28 to cool the lower and upper dies 12 and 14, respectively. It will be appreciated that the circulating cooling fluids will cool the lower and upper dies 12 and 14 and that the lower and upper dies 12 and 14 will quench and cool the hot-stamped component 36. The stamping press 34 can maintain the lower and upper dies 12 and 14 in a closed relationship for a predetermined amount of time to permit the hot-stamped component 36 to be cooled to a desired temperature.

The distance between the cooling channels 22 and 28 and the complex die surfaces 20 and 26, respectively, as well as the mass flow rate of the cooling fluid and the temperature of the fluid are selected to control the cooling of both the lower and upper dies 12 and 14such that the hot-stamped component 36 is quenched in a controlled manner consistently across its major surfaces to cause a phase transformation to a desired metallurgical state. In the particular example provided, the blank 30 is heated such that its structure is substantially (if not entirely) composed of austenite, the heated blank 30 is formed between the lower and upper dies 12 and 14 and the hot-stamped component 36 is quenched by the lower and upper dies 12 and 14 prior to the ejection of the hot-stamped component 36 from the lower and upper dies 12 and 14. In this regard, the lower and upper dies 12 and 14 function as a heat sink to draw heat from and thereby quench the hot-stamped component 36 in a controlled manner to cause a desired phase transformation (e.g., to martensite or bainite) in the hot-stamped component 36 and optionally to cool the hot-stamped component 36 to a desired temperature. Thereafter, the lower and upper dies 12 and 14 can be separated from one another (i.e., opened) and the heat-treated hot-stamped component 36 can be removed from the die cavity. Construction of the hot forming die set 10 in accordance with the teachings of the present disclosure permits the rate of quenching at each point on the die surface to be controlled in a precise manner. This is particularly advantageous for high-volume production as it is possible to employ relatively short overall cycle times while achieving an austenite-to-martensite transformation. In our experiments and simulations, we have found that it is possible to obtain an austenite-to-martensite transformation within about 5 seconds from the closing of the hot forming die set 10 and that in some situations it is possible to obtain an austenite-to-martensite transformation within about 2 to about 4 seconds from the closing of the hot forming die set 10.

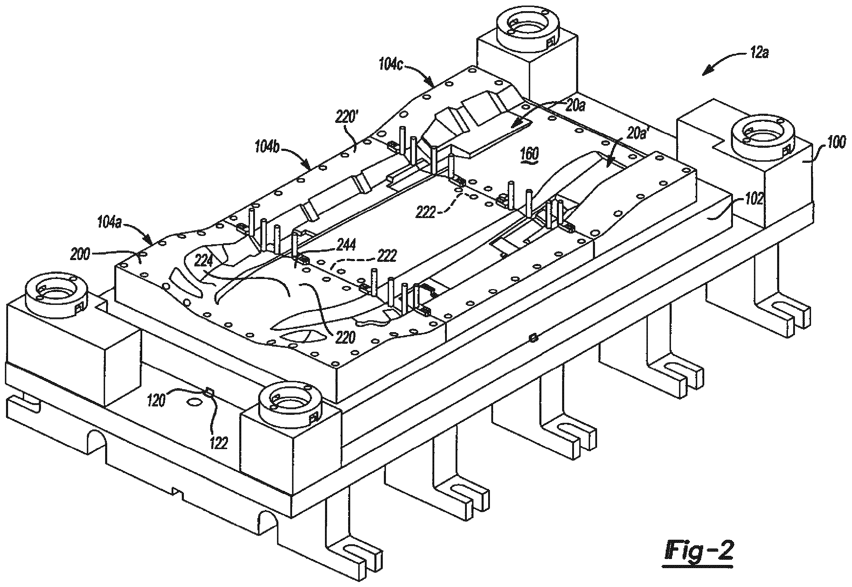

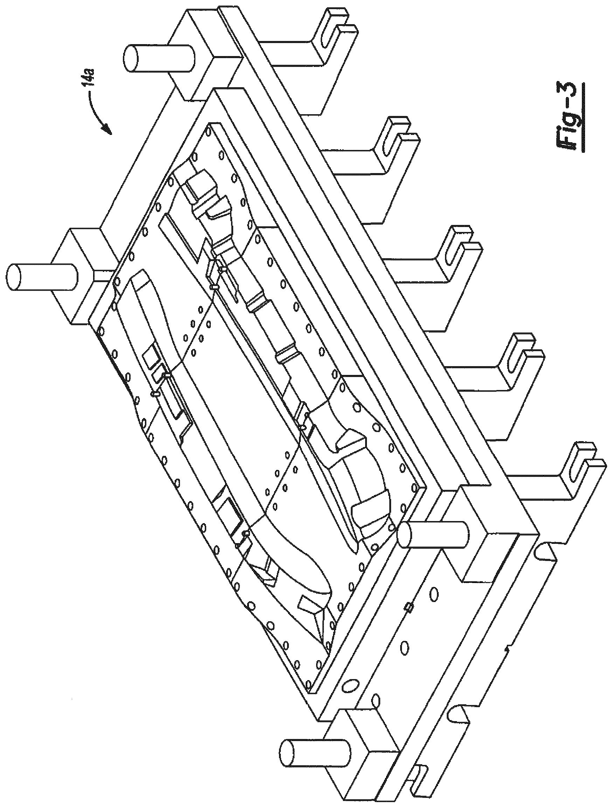

With reference to Figures 2 and 3, a first exemplary hot forming die set 10a is illustrated to include a lower die 12a and an upper die 14a. The upper die 14a can be formed in a substantially similar manner as the lower die 12a and as such, only the lower die 12a will be discussed in detail herein.

The lower die 12a can include a die base 100, a manifold base 102 and one or more die structures (e.g., die structures 104a, 104b and 104c) that can cooperate to form a die surface (e.g., die surfaces 20a and 20a'). The die base 100 is a platform or base that can perform one or more conventional and well known functions, such as providing a means for precisely mounting the remainder of the die, providing a means for mounting the die to a stamping press, and providing a means for guiding a mating die (i.e., the upper die 14) relative to the die when the die and the mating die are closed together. Except as noted otherwise herein, the die base 100 can be conventional in its construction and as such, need not be discussed in further detail herein.

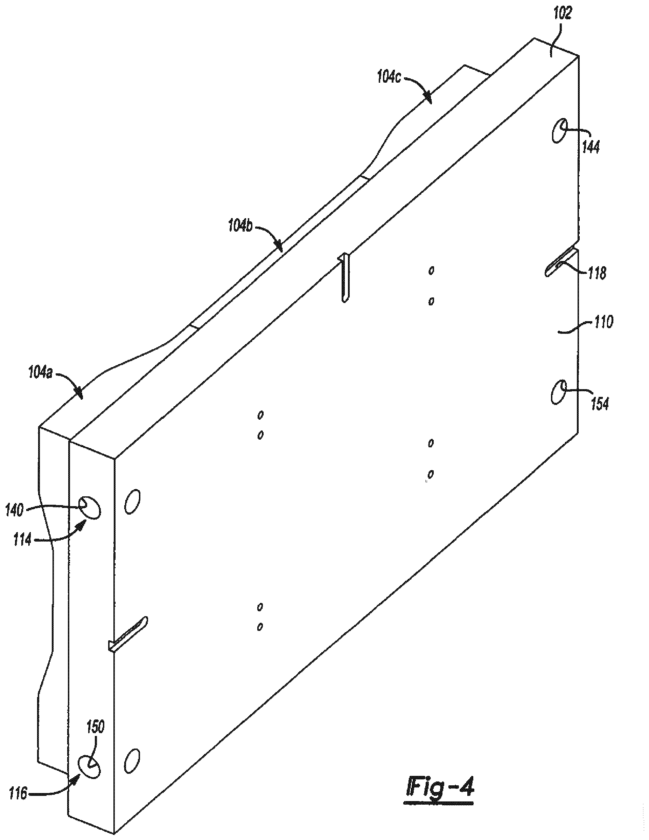

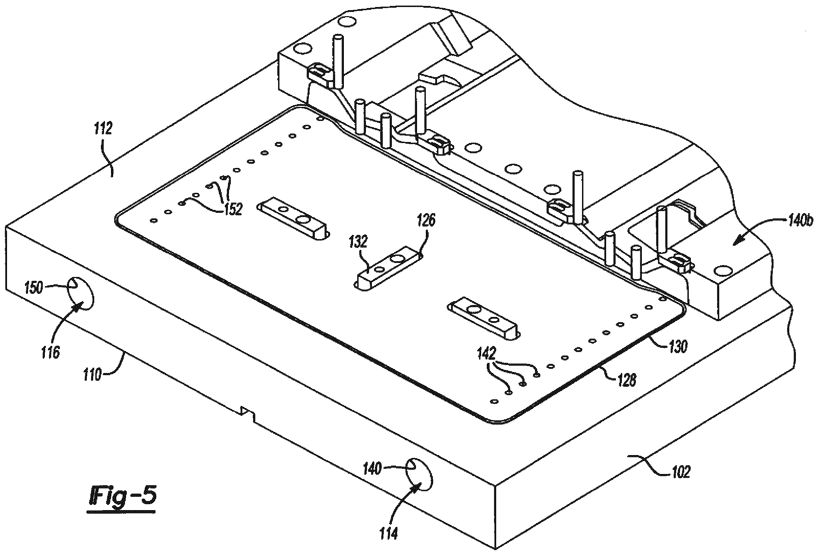

With reference to Figures 4 and 5, the manifold base 102 can be a slab-like member that is formed of an appropriate tool steel. The manifold base 102 can include a first mounting surface 110, a second mounting surface 112, an input manifold 114 and an output manifold 116. The first mounting surface 110 is configured to be mounted to the die base 100 (Fig. 2) and can include one or more positioning features, such as slots 118, that can be employed to locate the manifold base 102 relative to the die base 100 (Fig. 2). In the example provided, key members 120 (Fig. 2) are received into the slots 118 and engage mating slots 122 (Fig. 2) that are formed in an associated surface of the die base 100 (Fig. 2). The second mounting surface 112 can be opposite the first mounting surface 110 and can include one or more positioning features, such as slots 126, and one or more seal grooves 128 for receiving a seal member 130 that will be discussed in detail, below. The slots 126 can be employed to locate the die structure(s) (e.g., die structure 104a) to the manifold base 102. In the example provided, key members 132 are received in the slots 126 and engage corresponding slots (not shown) that are formed in the die structures 104a, 104b and 104c.

The input manifold 114 can comprise a relatively large diameter bore 140 that can extend longitudinally through the manifold base 102 on a first lateral side of the manifold base 102, and a plurality of input apertures 142 that can extend from the bore 140 through the second mounting surface 112. In the particular example provided, two supply apertures 144 are formed through the first mounting surface 110 and intersect the bore 140; the supply apertures 144 are configured to be coupled in fluid connection to the source of cooling fluid 38 (Fig. 1) to receive pressurized cooling fluid therefrom, and the opposite ends of the bore 140 can be plugged in a fluid-sealed manner (e.g., via pipe plugs). Accordingly, it will be appreciated that cooling fluid introduced to the supply apertures 144 will flow into the bore 140 and out through the input apertures 142.

The output manifold 116 can similarly comprise a relative large diameter bore 150, which can extend longitudinally through the manifold base 102 on a second, opposite lateral side of the manifold base 102, and a plurality of output apertures 152 that can extend from the bore 150 through the second mounting surface 112. In the particular example provided, two return apertures 154 are formed through the first mounting surface 110 and intersect the bore 150; the return apertures 154 are configured to be coupled in fluid connection to the source cooling fluid 38 (Fig. 1) to discharge cooling fluid to the reservoir (not shown) of the source of cooling fluid 38 (Fig. 1), and the opposite ends of the bore 150 can be plugged in a fluid-sealed manner (e.g., via pipe plugs). Accordingly, it will be appreciated that cooling fluid received into the bore 150 through the output apertures 152 will flow out of the manifold base 102 through the return apertures 154.

Returning to Figure 2, the lower die 12a of the particular example provided employs three discrete die structures 104a, 104b and 104c that collectively form a pair of die surfaces 20a and 20a'. Three discrete structures have been employed in this example to permit portions of the lower die 12a to be replaced and/or serviced as needed. Construction of the lower die 12a in this manner can facilitate efficient and inexpensive maintenance of the die, but those of ordinary skill in the art will appreciate that the die may employ more or fewer die structures (e.g., a single die structure). The term "die surface" is employed herein to identify the portion(s) of the surface of a die (e.g., the lower die 12a) that form a portion of hot-stamped component 36 (Fig. 1). Accordingly, it will be appreciated from this disclosure that a "die surface" need not be coextensive with the associated outer surface of a die structure and that where two or more die surfaces are incorporated into a die structure constructed in accordance with the teachings of the present disclosure, a space 160, which does not form a portion of either of the die surfaces 20a and 20a', can be provided between the die surfaces 20a and 20a'.

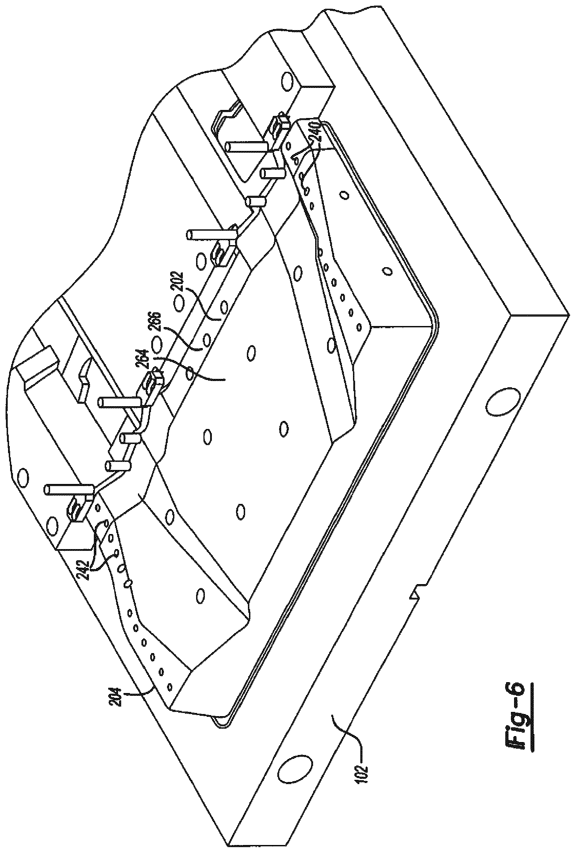

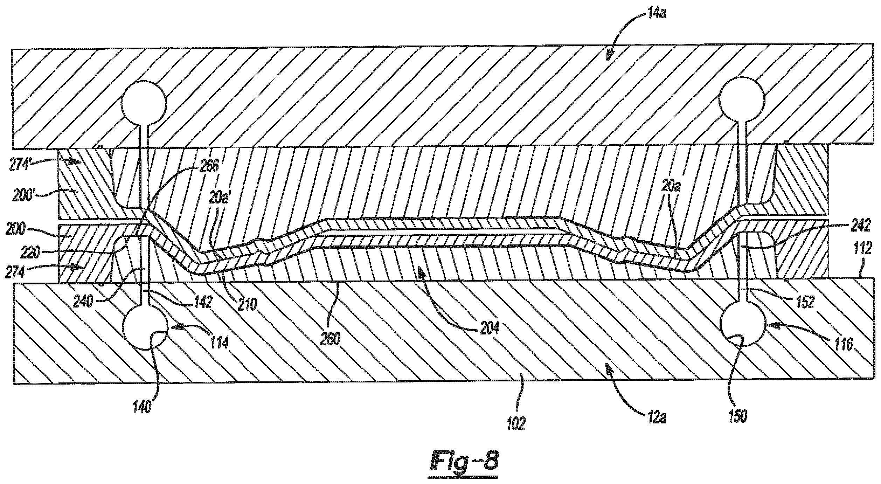

With reference to Figures 2 and 6 though 8, the construction of the die structure 104a is illustrated. It will be appreciated that the construction of the remaining die structures 104b and 104c can be substantially similar and as such, the discussion of the construction of the die structure 104a will suffice for the discussion of the remaining die structures 104b and 104c. The die structure 104a includes a cap 200 (Figs. 7 and 8), can include one or more end members or seam blocks 202 (Figs. 6 and 7) and includes a cap insert 204 (Figs. 6 and 8). The cap 200, the seam block(s) 202 and the cap insert 204 can cooperate to define a plurality of cooling channels 210 that can be coupled in fluid connection to the input apertures 142 and the output apertures 152.

With specific reference to Figures 7 and 8, the cap 200 can be formed of a tool steel, such as DIEVAR^{®} or commercially available H-11 or H-13 and can be a shell-like structure that can include a cap wall 220 and a flange 222. The cap wall 220 includes an outer surface 224, which can define respective portions of the die surfaces 20a (Fig. 2) and 20a' (Fig. 2), and an inner surface 226 that can be spaced apart from the outer surface 224 by a desired amount. It will be appreciated that although the cap wall 220 has been illustrated as having a relatively uniform thickness, the thickness of any given portion of the cap wall 220 may be selected as appropriate. In the example provided, the flange 222 extends on three sides of the cap wall 220 as the die structure 104a (Fig. 2) is abutted against one other die structure (i.e., die structure 104b in Fig. 2). In contrast, the flange structure 220' (Fig. 2) of the die structure 104b (Fig. 2) abuts two die structures (i.e., die structures 104a and 104c in Fig. 2) and as such, extends only from the two opposite lateral sides of the die structure 104b (Fig. 2). Consequently, the die structure 104b (Fig. 2) employs two discrete seam blocks 202. The flange 222 can be configured to overlie an associated seal groove 128 that is formed in the manifold base 102 and can include a plurality of through-holes 230 that can be employed to fixedly but releasably secure the flange 222 to the manifold base 102 by threaded fasteners (not shown) that can be threadably engaged to threaded holes in the manifold base 102, for example,

With specific reference to Figures 6 through 8, the seam block 202 and the cap insert 204 are configured to support the cap wall 220 and as noted above, cooperate with the cap wall 220 to form a plurality of cooling channels 210 that can fluidly couple the input apertures 142 to the output apertures 152. The seam block 202 and the cap insert 204 include first and second apertures 240 and 242, respectively, that can be aligned to the input apertures 142 and the output apertures 152, respectively, to facilitate the flow of cooling fluid therethrough. It will be appreciated that in situations where a single die structure is employed to form the entire die surface, no seam blocks would be necessary (i.e., the flange 222 could extend completely around the cap wall 220 and the flange 222 could support the entire perimeter of the cap wall 220). In the example provided, however, the portion of the die surfaces 20a and 20a' defined by the die structure 104a (Fig. 2) extends to the unsupported edge 244 (Fig. 2) of the cap wall 220 (i.e., the portion of the cap wall 220 that is not supported byt he flange 22) and consequently, this portion of the die surfaces 20a and 20a' (Fig. 2) must be both cooled in a controlled manner and supported. If the flange 222 were to be formed so as to extend in this area, the flange 222 would support the edge 244 of the cap wall 220 but would not permit the construction of cooling channels 210 in this area in accordance with the teachings of the present disclosure.

If the cap insert 204 were employed to support the edge 244 (Fig. 2) rather than a seam block 202, it would be desirable to couple the edge 244 to the cap insert 204. Threaded fasteners (not shown) could be employed to threadably engage blind threaded holes (not shown) formed in the cap wall 220 proximate the edge 244 in some situations, but the cap wall 220 may not be sufficiently thick in all situations to include blind threaded holes for receiving the threaded fasteners. Alternatively, the cap insert 204 could be substantially permanently coupled to the cap wall 220, as through welding. Construction in this manner may not be desirable in all instances as both the cap 200 and the cap insert 204 may need to be replaced when the cap 200 is sufficiently worn.

The cap insert 204, and where employed, the seam block(s) 202 can have first surfaces 260 and 262, respectively, which can be abutted against and fixedly secured to the second mounting surface 112 of the manifold base 102, and second surfaces 264 and 266, respectively, that can be abutted against the inner surface 226 of the cap wall 220. It is desirable that the second surfaces 264 and 266 of the cap insert 204 and the seam block(s) 202 closely match the contour of the interior surface 226 of the cap wall 220 and as such, it will typically be necessary "try out" and bench the inner surface 226 and/or the second surfaces 264 and 266 of the cap insert 204 and the seam block(s) 202 so that the surfaces conform to one another to a desired degree.

The cooling channels 210 can be formed in the inner surface 226, the second surface 264, the second surface 266 or combinations thereof. In the particular example provided, the cooling channels 210 are machined into the inner surface 226 of the cap wall 220 with a ball nose end mill (not shown). The cooling channels 210 can be machined such that they are disposed a predetermined distance from the die surfaces 20a and 20a'. In this regard, it will be appreciated that each cooling channel 210 has a contour (when the cooling channel 210 is viewed in a longitudinal section view) and that the contour of each cooling channel 210 is generally matched to the contour of the die surface (i.e., the die surface 20a or 20a') at locations that are directly In-line with the cooling channel 210 (when the cooling channel 210 is viewed in a longitudinal section view). For purposes of this disclosure and the appended claims, the contour of a cooling channel 210 matches the contour of a die surface if deviations between the smallest distance between the cooling channel 210 and the die surface for each relevant point of the cooling channel 210 (i.e., each point that is directly in-line with a die surface when the cooling channel 210 is viewed in a longitudinal section view) are within about 0.15 inch and preferably, within about 0.04 inch.

With the cooling channels 210 formed (e.g., in the inner surface 226 of the cap wall 220 in this example), the seam block 202 can be coupled to the cap 200 to support the edge 244. in the particular example provided, the seam block 202 overlies two of the cooling channels 210 that are formed proximate the edge 244. The seam block 202 can be welded to the cap 200 (i.e., to the cap wall 220 and the flange 222) to fixedly couple the two components together. In the particular example provided, the weld forms a seal that prevents the cooling fluid that is introduced to the two cooling channels 210 proximate the edge 244 from Infiltrating through the interface between the seam block 202 and the cap 200. Those of ordinary skill in the art will appreciate that the seam block 202 forms the "missing portion" of the flange 222 and the assembly of the cap 200 and seam block 202 forms a cavity 270 into which the cap insert 204 can be received.

The cap insert 204 can be fixedly but removably coupled to the second mounting surface 112 of the manifold base 102 in any appropriate manner. In the example provided, locators, such as slots and keys (not specifically shown) are employed to position the cap insert 204 in a desired position relative to the manifold base 102 and threaded fasteners (not specifically shown) can extend through the cap insert 204 and threadably engage corresponding threaded apertures (not specifically shown) in the manifold base 102. The assembly 274 of the cap 200 and the seam block 202 can be fitted over the cap insert 204, which can position the portion of the die surfaces 20a and 20a' in a desired location relative to the manifold base 102 due to the prior positioning of the cap insert 204 and the conformance between the inner surface 226 and the second surface 264. Threaded fasteners (not specifically shown) can extend through the assembly 274 (i.e., through the flange 222, and the seam block 202 and the cap wall 220) and can threadably engage threaded apertures (not specifically shown) that are formed in the manifold base 102. it will be appreciated that a seal member 130, such as an O-ring, can be received in the seal groove 128 and that the seal member 130 can sealingly engage the manifold base 102, the flange 222 and the seam block 202.

In operation, pressurized fluid, preferably water, from the source of cooling fluid 38 (Fig. 1) is input to the input manifold 114, flows out the input apertures 142 in the manifold base 102, through the first apertures 240 in the cap insert 204 and seam block 202, through the cooling apertures 210, through the second apertures 242 in the cap insert 204 and the seam block 202 and through the output manifold 116 to the reservoir (not shown) of the source of cooling fluid 38 (Fig. 1). In one form, the cooling fluid is cycled in a continuous, uninterrupted manner, but it will be appreciated that the flow of cooling fluid can be controlled in a desired manner to further control the cooling of the die surfaces 20a and 20a'.

The source of cooling fluid 38 (Fig. 1) and the design, placement and construction of the cooling channels 210 permit the lower and upper dies 12a and 14a to be cooled to an extent where they can quench the hot stamped component 36 (Fig. 1) relatively quickly, even when the hot forming die set 10a (Fig. 2) is employed in volume production. Accordingly, a hot forming die set 10a can be employed to form, quench and cool the hot-stamped components (workpieces) at volumes such as 120 or 180 pieces per hour and achieve an austenite-to-martensite phase transformation over the entirety of the workpiece. The austenite-to-martensite phase transformation may be achieved within about 4 seconds or less of the closing of the lower and upper dies 12a and 14a. Significantly, the hot-stamped components 36 (Fig. 1) can be quenched and optionally cooled such that it is free of significant amounts of pearlite and bainite when it is removed from the hot-forming die set 10a (Fig. 2).

Those of ordinary skill in the art will appreciate that the cap 200 is heat treated in an appropriate heat-treating operation to harden the die surfaces 20a and 20a' to a desired hardness. Those of ordinary skill in the art will also appreciate that the particular construction of the cap 200 is susceptible to distortion during the heat treating operation. We have noted in our experiments that distortion can be controlled by coupling the cap assembly 274' of the upper die 14a with the cap assembly 274 of the lower die 12a and heat treating the coupled cap assemblies 274, 274' together. More specifically, the cap 200 of a lower die 12a is assembled to its associated seam block(s) 202, if any, and the associated cap 200' of a corresponding upper die 14a is assembled to its associated seam block(s) 202, if any. The assembly 274 (i.e., the cap and seam blocks) of the lower die 12a is coupled to the assembly 274' (i.e., the cap and seam blocks) of the upper die 14a to form a hollow structure having a rim, which is formed by the abutting flanges and seam blocks. In our experiments, we coupled the assemblies 274, 274' to one another via tack welds located at the interface of the abutting flanges and the interface of the abutting seam blocks. We removed the tack welds following the heat treat operation and observed significantly less distortion of each assembly as compared to assemblies that had been separately heat treated.

With reference to Figure 9, a second exemplary hot forming die set 10b is partially illustrated to include a lower die 12b and an upper die 14b. The upper die 14b can be formed in a substantially similar manner as that of the lower die 12b and as such, only the lower die 12b will be discussed in detail herein.

The lower die 12b can include a die base (not shown), a manifold base 102 and one or more die structures 104'. The die base and the manifold base 102 can be substantially identical to those which are described above. Each die structure 104' can include a die member 300 and a plurality of filler plates 302 (only one of which is shown). The die member 300 can have an outer surface 306, which can at least partially define at least one die surface 20', and an inner surface 308 that can be abutted against the second mounting side 112 of the manifold base 102. With additional reference to Figure 10, cooling slots or grooves 310 can be formed into the inner surface 308 (e.g., with a ball nose end mill) such that the interior end 312 of the groove 310 is generally matched to the contour of the die surface 20' when the groove 310 is viewed in a longitudinal section view. The filler plates 302 can be formed of any appropriate material and can be formed to fill a portion of an associated groove 310 such that the unfilled portion of the groove 310 can define a cooling channel 210'. In this example, the cooling channel 210' includes input and output ports 240' and 242', respectively, that are directly coupled to the input and output apertures 142 and 152 that are formed in the manifold base 102.

The filler plates 302 can be formed in any desired manner, such as wire electro-discharge machining (wire EDM'ing). The thickness of the filler plates 302 can be selected to closely match a width of the grooves 310, but it be appreciated that the filler plates 302 can be received into the grooves 310 in a slip-fit manner. The filler plates 302 may be retained in the grooves 310 in any desired manner. In one form, the filler plates 302 can be tack welded to the die member 300, but in the example provided, one or more retaining bars 330 can be secured to the die member 300 to inhibit the withdrawal of the filler plates 302 from the grooves 310.

The die structure 310 can be coupled to the manifold base 102 in a manner that is substantially similar to that which is described above for the coupling of the cap assembly (i.e., the cap 200 and the seam block 202) to the manifold base 102. In this regard, threaded fasteners (not shown) can be employed to secure the die member 300 to the manifold base 102 and a seal member 130 can be employed to inhibit infiltration of cooling fluid through the interface between the manifold base 102 and the die member 300.

While specific examples have been described in the specification and illustrated in the drawings, it will be understood by those of ordinary skill in the art that various changes may be made and equivalents may be substituted for elements thereof without departing from the scope of the present disclosure as defined in the claims.

## Claims

1. A hot forming die assembly for shaping and subsequently cooling a component, comprising:
a cap (200) having an outer surface (20a) with a three-dimensionally contoured profile for shaping the component and an inner surface (226) having a profile that generally matches said three-dimensionally contoured profile of said outer surface (20a);
a cap insert (204) having an upper surface (264, 266) with a profile that generally matches said three-dimensionally contoured profile of said outer and inner surfaces (20a, 226) of said cap (200);
said upper surface of said cap insert (204) adjacent said inner surface (226) of said cap (200);
said cap insert (204) presenting a first aperture (240) for receiving coolant and a second aperture (242) for conveying coolant;
said inner surface (226) of said cap (200) and said upper surface (264, 266) of said cap insert (204) cooperating with one another to define a cooling channel (210) for conveying coolant to cool the component, said cooling channel (210) having a length extending from said first aperture (240) to said second aperture (242); and
wherein a portion of said cooling channel (210) at said inner surface (226) of said cap (200) is offset from said outer surface (20a) of said cap (200) in a direction parallel to a die action direction by a consistent distance along said length of said cooling channel (210).

2. The hot forming die assembly as set forth in claim 1 wherein said cooling channel (210)is formed into said inner surface of said cap (200).

3. The hot forming die assembly as set forth in claim 1 wherein said cooling channel is formed into said upper surface of said cap insert (204).

4. The hot forming die assembly as set forth in claim 1 wherein said cooling channel (210) is machined into at least one of said inner surface (226)of said cap (200) and said upper surface (264, 266) of said cap insert (204).

5. The hot forming die assembly as set forth in claim 1 wherein said cap (200) includes a flange (222) extending along a portion of the perimeter of said cap (200).

6. The hot forming die assembly as set forth in claim 5 wherein said flange (222) extends along less than the entire perimeter of said cap (200), further including at least one seam block (202) extending along the portions of the perimeter of the cap (200) without said flange (222).

## Patentansprüche

1. Warmumformungswerkzeug zum Formen und anschließenden Kühlen eines Bauteils, umfassend:
eine Kappe (200) mit einer Außenfläche (20a) mit einem dreidimensional konturierten Profil zum Formen des Bauteils und einer Innenfläche (226) mit einem Profil, das im Allgemeinen zu dem dreidimensional konturierten Profil der Außenfläche (20a) passt;
einen Kappeneinsatz (204) mit einer oberen Fläche (264, 266) mit einem Profil, das im Allgemeinen mit dem dreidimensionalen konturierten Profil der Außen- und Innenfläche (20a, 226) der Kappe (200) übereinstimmt;
wobei die obere Fläche des Kappeneinsatzes (204) an die Innenfläche (226) der Kappe (200) angrenzt;
wobei der Kappeneinsatz (204) eine erste Öffnung (240) zur Aufnahme von Kühlmittel und eine zweite Öffnung (242) zum Fördern von Kühlmittel aufweist;
wobei die Innenfläche (226) der Kappe (200) und die obere Fläche (264, 266) des Kappeneinsatzes (204) miteinander zusammenwirken, um einen Kühlkanal (210) zum Fördern von Kühlmittel zum Kühlen des Bauteils zu definieren, wobei der Kühlkanal (210) eine Länge aufweist, die sich von der ersten Öffnung (240) zu der zweiten Öffnung (242) erstreckt; und
wobei ein Abschnitt des Kühlkanals (210) an der Innenfläche (226) der Kappe (200) von der Außenfläche (20a) der Kappe (200) in einer Richtung parallel zu einer Matrizenwirkungsrichtung um einen gleichmäßigen Abstand entlang der Länge des Kühlkanals (210) versetzt ist.

2. Warmformwerkzeuganordnung nach Anspruch 1, wobei der Kühlkanal (210) in der Innenfläche der Kappe (200) ausgebildet ist.

3. Warmformwerkzeuganordnung nach Anspruch 1, wobei der Kühlkanal in die obere Fläche des Kappeneinsatzes (204) eingeformt ist.

4. Warmformwerkzeuganordnung nach Anspruch 1, wobei der Kühlkanal (210) in die Innenfläche (226) der Kappe (200) und/oder die obere Fläche (264, 266) des Kappeneinsatzes (204) eingearbeitet ist.

5. Warmformwerkzeuganordnung nach Anspruch 1, wobei die Kappe (200) einen Flansch (222) aufweist, der sich entlang eines Teils des Umfangs der Kappe (200) erstreckt.

6. Warmformwerkzeuganordnung nach Anspruch 5, wobei sich der Flansch (222) über weniger als den gesamten Umfang der Kappe (200) erstreckt und ferner mindestens einen Nahtblock (202) aufweist, der sich über die Teile des Umfangs der Kappe (200) ohne den Flansch (222) erstreckt.

## Revendications

1. Ensemble de matrice de formage à chaud pour façonner et ensuite refroidir un composant, comprenant :
une calotte (200) ayant une surface externe (20a) avec un profil à contour tridimensionnel pour façonner le composant, et une surface interne (226) ayant un profil qui correspond généralement audit profil à contour tridimensionnel de ladite surface externe (20a) ;
un insert de calotte (204) ayant une surface supérieure (264, 266) présentant un profil qui correspond généralement audit profil à contour tridimensionnel desdites surfaces externe et interne (20a, 226) de ladite calotte (200) ;
ladite surface supérieure dudit insert de calotte (204) étant adjacente à ladite surface interne (226) de ladite calotte (200) ;
ledit insert de calotte (204) présentant une première ouverture (240) pour recevoir le réfrigérant et une deuxième ouverture (242) pour transporter le réfrigérant ;
ladite surface interne (226) de ladite calotte (200) et ladite surface supérieure (264, 266) dudit insert de calotte (204) coopérant l'une avec l'autre pour définir un canal de refroidissement (210) pour transporter un réfrigérant afin de refroidir le composant, la longueur dudit canal de refroidissement (210) s'étendant de ladite première ouverture (240) à ladite deuxième ouverture (242) ; et
dans lequel une portion dudit canal de refroidissement (210) sur ladite surface interne (226) de ladite calotte (200) est décalée par rapport à ladite surface externe (20a) de ladite calotte (200) dans une direction parallèle à une direction d'actionnement de la matrice d'une distance uniforme le long de ladite longueur dudit canal de refroidissement (210).

2. Ensemble de matrice de formage à chaud selon la revendication 1, dans lequel ledit canal de refroidissement (210) est formé dans ladite surface interne de ladite calotte (200) .

3. Ensemble de matrice de formage à chaud selon la revendication 1, dans lequel ledit canal de refroidissement est formé dans ladite surface supérieure dudit insert de calotte (204).

4. Ensemble de matrice de formage à chaud selon la revendication 1, dans lequel ledit canal de refroidissement (210) est usiné dans au moins une surface parmi ladite surface interne (226) de ladite calotte (200) et ladite surface supérieure (264, 266) dudit insert de calotte (204).

5. Ensemble de matrice de formage à chaud selon la revendication 1, dans lequel ladite calotte (200) comprend une bride (222) qui s'étend le long d'une portion du périmètre de ladite calotte (200).

6. Ensemble de matrice de formage à chaud selon la revendication 5, dans lequel ladite bride (222) s'étend sur une partie seulement du périmètre de ladite calotte (200), comprenant en outre au moins un bloc de jonction (202) qui s'étend le long des portions du périmètre de la calotte (200) sans ladite bride (222).
